# EUROPÄISCHE PATENTSCHRIFT

(11) **EP 2 902 276 B1**
(45) Veröffentlichungstag und Bekanntmachung des Hinweises auf die Patenterteilung: **08.06.2016**
(21) Anmeldenummer: 15157587.5
(22) Anmeldetag: 14.12.2011
(51) Int. Cl.: B60R 25/00, E05B 19/04, G07C 9/00

(54) **Elektronischer Schlüssel**
Electronic key
Clé électronique

(30) Priorität: 21.12.2010 DE 102010061457
(43) Veröffentlichungstag der Anmeldung: 05.08.2015
(62) Teilanmeldung aus: 11808565.3
(73) Patentinhaber: Huf Hülsbeck & Fürst GmbH & Co. KG, 42551 Velbert (DE)
(72) Erfinder: Müller, Ulrich, 42549 Velbert (DE)

(56) Entgegenhaltungen:
- EP-A2- 1 944 818
- WO-A1-2008/040269
- DE-A1-102006 046 801
- JP-A- 2004 052 471
- JP-A- 2009 293 247
- US-A1- 2005 223 766

## Beschreibung

Die Erfindung betrifft einen elektronischen Schlüssel, mit dessen Hilfe ein Schloss, insbesondere ein Kraftfahrzeugschloss eines Kraftfahrzeugs, drahtlos, beispielsweise per Funk, geöffnet und/oder geschlossen werden kann.

Aus DE 10 2006 046 801 A1 ist ein elektronischer Schlüssel bekannt, bei dem eine Gehäuseschale zur Aufnahme einer Schaltungselektronik einen Schüsselschacht zur Aufnahme eines Schlüsselschafts eines Notschlüssels aufweist. Die Gehäuseschale weist ferner ein Batteriefach auf, in das eine Knopfbatterie zur Energieversorgung der Schaltungselektronik eingesetzt ist. Die Knopfbatterie ist von einem Batteriefachdeckel abgedeckt. Der Batteriefachdeckel weist einen Schacht auf, der einen Teil des Schlüsselschachts ausbilden kann. Hierzu kann der Batteriefachdeckel gegen eine Federkraft einer an der Batterie anliegenden Kontaktfeder in die Gehäuseschale eingedrückt werden, wonach der Schlüsselschaft erst in den Schacht eingeschoben werden kann. Nach dem Loslassen des Batteriefachdeckels drückt die Kontaktfeder den Schacht des Batteriefachdeckels gegen den Schlüsselschaft, wodurch der in den Schacht aufgenommene Schlüsselschaft für den Batteriefachdeckel eine Verliersicherung ausbildet.
Aus der WO2008040269A1 ist ein elektronischer Schlüssel bekannt, welcher ein Gehäuse und einen Batteriefachdeckel aufweist, wobei ein Notschlüssel den Batteriefachdeckel gegen eine Dichtung drückt und so für eine Abdichtung gegen Feuchtigkeitseindringung in das Batteriefach sorgt.
Es besteht ein ständiges Bedürfnis das Risiko eines Ausfalls der Funktionsfähigkeit eines elektrischen Schlüssels zu reduzieren.
Es ist die Aufgabe der Erfindung einen elektrischen Schlüssel zu schaffen, der ein geringes Risiko eines Ausfalls der Funktionsfähigkeit ermöglicht.
Die Lösung der Aufgabe erfolgt erfindungsgemäß durch die Merkmale des Anspruchs 1. Bevorzugte Ausgestaltungen der Erfindung sind in den Unteransprüchen angegeben.
Der erfindungsgemäße elektronischer Schlüssel zum drahtlosen Betrieb eines Schlosses, insbesondere Kraftfahrzeugschloss weist eine Gehäuseschale zur zumindest teilweisen Aufnahme einer Schaltungselektronik für den drahtlosen Betrieb des Schlosses auf, wobei die Gehäuseschale ein Batteriefach zur Aufnahme einer Batterie zur Energieversorgung der Schaltungselektronik aufweist. Zusätzlich ist ein Batteriefachdeckel zum Abdecken der in dem Batteriefach aufgenommenen Batterie und ein einen in die Gehäuseschale einsteckbaren Schlüsselschaft aufweisender Notschlüssel zum mechanischen Betrieb des Schlosses vorgesehen, wobei der Schlüsselschaft zwischen einer Einführposition, in welcher der Schlüsselschaft an einem Schlüsselschacht der Gehäuseschale angesetzt ist, und einer Endposition, in welcher der Schlüsselschaft in dem Schlüsselschacht sicher aufgenommen ist, bewegbar ist. Es ist zwischen der Gehäuseschale und dem Batteriefachdeckel eine Dichtung zum Schutz der Batterie vor Umwelteinflüssen vorgesehen, wobei der Batteriefachdeckel eine Anlagefläche zum direkten Kontakt an dem Schlüsselschaft aufweist und der Schlüsselschaft in der Endposition über die Anlagefläche des Batteriefachdeckels eine Anpresskraft auf die Dichtung ausübt.

Erfindungsgemäß weist der Batteriefachdeckel eine insbesondere ösenförmige Lasche zur Ausbildung der Anlagefläche auf. Die Lasche kann beispielsweise L-förmig oder U-förmig ausgestaltet sein. Über die Lasche kann der Kraftfluss von dem Schlüsselschaft zum Batteriefachdeckel verlaufen. Insbesondere kann die Anlagefläche im Wesentlichen parallel zu einer von dem Batteriefach wegweisenden Außenfläche des Batteriefachdeckels verlaufen. Mit Hilfe der Lasche ist es ohne konstruktive Schwierigkeiten möglich den Batteriefachdeckel auf die Gehäuseschale zu zu ziehen. Es ist nicht erforderlich den Batteriefachdeckel nach außen gegen eine Hinterschneidung zu drücken.

Der Schlüsselschaft des Notschlüssels kann beim Einführen in den Schüsselschacht der Gehäuseschale über die Anlagefläche eine Kraft in den Batteriefachdeckel einleiten, um die Dichtung zwischen dem Batteriefachdeckel und der Gehäuseschale zu verpressen, so dass sich automatisch eine hohe Dichtheit ergeben kann, aufgrund dessen der elektronische Schlüssel zumindest im Bereich des Batteriefachs wasserdicht sein kann. Das Risiko eines Ausfalls der Funktionsfähigkeit des elektrischen Schlüssels, beispielsweise durch Wassereintritt, ist dadurch reduziert. Ferner wird berücksichtigt, dass eine häufige Situation, in welcher der Notschlüssel benötigt wird, vorliegt, wenn die Batterieleistung der Batterie zum ordnungsgemäßen Gebrauch des elektronischen Schlüssels nicht mehr ausreicht. Die Verwendung des Notschlüssels ermöglicht dadurch einen einfachen Zugang zur Batterie im Batteriefach, um die Batterie schnell und einfach austauschen zu könne.

Der Batteriefachdeckel kann durch den Schlüsselschaft verklemmt, verkeilt und/oder arretiert werden. In der Endposition kann der Schlüsselschaft derart von der Gehäuseschale aufgenommen sein, dass der Notschlüssel nicht von alleine, beispielsweise aufgrund seines Eigengewichts, aus der Gehäuseschale herausfallen kann. Beispielsweise ist der Schlüsselschaft reibschlüssig von der Gehäuseschale gehalten und/oder über ein Halteelement, beispielsweise ein Clip einer Clipverbindug, formschlüssig arretiert. In der Einführposition befindet sich der Schlüsselschaft beim Einstecken in die Gehäuseschale mit seiner Spitze kurz vor dem Schlüsselschacht und wird gerade in den Schlüsselschaft eingefädelt. Nach dem Verlassen der Einführposition in Einsteckrichtung ist die weitere Bewegung des Schlüsselschafts durch den Schlüsselschacht begrenzt und insbesondere geführt. Der Schlüsselschaft kann beispielsweise mit einem im Wesentlichen longitudinalem Bewegungsanteil in Richtung der Erstreckung des Schlüsselschafts in den Schlüsselschacht der Gehäuseschale eingeschoben werden und anschließend durch eine Schwenkbewegung quer zur longitudinalen Erstrecken des Schlüsselschafts und/oder eine Drehung um eine Drehachse entlang der longitudinalen Erstreckung des Schlüsselschafts eine Kraft auf die Anlagefläche des Batteriefachdeckels ausüben. Dadurch kann der Batteriefachdeckel mit der Anpresskraft über die Dichtung gegen die Gehäuseschale gedrückt werden, wobei der Batteriefachdeckel über die Dichtung direkt mit der Gehäuseschale oder über mindestens ein weiteres zwischengeschaltetes Bauteil, beispielsweise eine zur Gehäuseschale korrespondierende Gegenschale, indirekt mit der Gehäuseschale in Wirkverbindung stehen kann.

Die Schaltungselektronik kann zwischen der Gehäuseschale und einer zur Gehäuseschale korrespondierende Gegenschale aufgenommen sein, wobei die Gehäuseschale und/oder die Gegenschale selber innerhalb eines weiteren Bauteils vorgesehen sein können. Die Schaltungselektronik kann einen Sender/Empfänger aufweisen, um drahtlos, beispielsweise per Funk, mit einem elektronischen Schloss, insbesondere Kraftfahrzeugschloss eines Kraftfahrzeugs, kommunizieren zu können. Dadurch können eine Identifizierung und/oder eine Autorisierung zum öffnen und/oder Schließen des Schlosses überprüft werden und ein Öffnen und/oder Schließen des Schlosses eingeleitet oder verweigert werden. Die Batterie kann eine wiederaufladebare Batterie (Akkumulator) sein und/oder ist vorzugsweise als bauraumsparende Knopfbatterie ausgestaltet. Die Dichtung ist beispielsweise eine ringförmige Schnurdichtung, die vorzugsweise aus einem formveränderlichen, insbesondere elastischen Material hergestellt ist. Die Dichtung kann vorzugsweise gummielastisch sein und sich bei der Aufbringung der Anpresskraft verformen, um eine möglichst hohe Dichtwirkung bereitstellen zu können.
Insbesondere bildet die Anlagefläche des Batteriefachdeckels einen Teil einer Begrenzung des Schlüsselschachts aus. Die Anlagefläche kann in die Ausbildung des Schlüsselschachts integriert werden. Vorzugsweise erstreckt sich Anlagefläche zunächst etwas in den Schlüsselschacht hinein, so dass der Schlüsselschaft die Anlagefläche beim Einstecken in die Gehäuseschale wegdrücken kann und dadurch die zum Verpressen der Dichtung erforderliche Anpresskraft aufbaut. Insbesondere kann der Schlüsselschaft durch seine Bewegung im Schlüsselschacht der Gehäuseschale automatisch in eine insbesondere ösenförmige Lasche des Batteriefachdeckels eingefädelt werden, wobei die Lasche die Anlagefläche ausbildet.

Besonders bevorzugt ist der Schlüsselschaft derart ausgeformt, dass sich die von dem Schlüsselschaft auf die Anlagefläche des Batteriefachdeckels aufbringbare Kraft zwischen der Einführposition und der Endposition erhöht. Insbesondere kann sich die von dem Schlüsselschaft auf den Batteriefachdeckel aufgebrachte Kraft allmählich erhöhen, so dass sich die Anpresskraft auf die Dichtung im Wesentlichen gleichmäßig erhöhen kann. Ein sprunghafter Anstieg der Anpresskraft kann vermieden werden, so dass sich die Dichtung unter der sich erhöhenden Anpresskraft allmählich verformen kann und dadurch eine besonders hohe Dichtwirkung bereitstellen kann.

In einer bevorzugten Ausführungsform ist vorgesehen, dass der Schlüsselschacht eine Drehung des Schlüsselschaft bei einer Bewegung zwischen der Einführposition und der Endposition ermöglicht und/oder erzwingt. Der Schlüsselschaft kann beispielsweise durch eine gewundene Schachtführung des Schlüsselschafts zu einer Drehung um seine longitudinale Erstreckung gezwungen werden. Durch die Drehung des Schlüsselschafts kann ausgenutzt werden, dass der Schlüsselschaft in der Regal im Querschnitt recheckig ist, so dass der Schlüsselschaft mit seiner kurzen Erstreckung zwischen der Gehäuseschale und dem Batteriefachdeckel ohne großen Widerstand in den Schlüsselschacht eingeführt werden kann und nach einer Drehung von beispielsweise bis zu 90° +/- 5° in der Endposition mit seiner breiten Erstreckung zwischen der Gehäuseschale und dem Batteriefachdeckel positioniert sein kann. Ein zuvor vorhandenes Spiel kann dadurch eliminiert werden, so dass der Schlüsselschaft reibschlüssig, insbesondere mit Presspassung, in der Gehäuseschale aufgenommen ist. In diesem Zustand kann der Schlüsselschaft den Batteriefachdeckel verklemmen und/oder arretieren und gleichzeitig eine hinreichende Anpresskraft über den Batteriefachdeckel an die Dichtung aufbringen.

Insbesondere ist der Schlüsselschaft mit einem Schlüsselkopf verbunden, wobei der Schlüsselkopf in der Endposition des Schlüsselschafts oberflächenbündig in den Formverlauf der Gehäuseschale integriert ist. Über den Schlüsselkopf kann eine hinreichende Hebellänge bereitgestellt werden, um den Schlüsselschaft innerhalb der Gehäuseschale zu verdrehen. Insbesondere kann über die Hebelwirkung des Schlüsselkopfs eine ausreichende Anpresskraft auf die Dichtung ermöglicht werden. Insbesondere kann der Schlüsselschaft leicht innerhalb der Gehäuseschale mit Presspassung reibschlüssig verklemmt werden. Dadurch, dass der Schlüsselkopf in den Formverlauf integriert ist, ergibt sich für den Benutzer eine intuitiv zu erfassende Endposition, in welcher der Benutzer den Notschlüssel nicht mehr weiter drehen würde. Gleichzeitig ermöglicht der Schlüsselkopf eine einfache Handhabung des Notschlüssels, beispielsweise wenn die Batterieleistung zu niedrig für den Gebrauch der Schaltungselektronik ist und das Schloss von Hand mit Hilfe des Notschlüssels geöffnet und/oder geschlossen werden muss.

Vorzugsweise weist die Gehäuseschale und/oder der Batteriefachdeckel mindestens eine Rampe zur Zwangsführung des Schlüsselschafts, insbesondere zur Erhöhung der von dem Schlüsselschaft aufbringbaren Anpresskraft auf die Dichtung, auf. Durch die Rampe kann ein Spiel zwischen dem Schlüsselschaft und der Gehäuseschale und/oder dem Batteriefachdeckel reduziert und insbesondere eliminiert werden. Durch die Rampe kann der Schlüsselschaft auf die Anlagefläche des Batteriefachdeckels gedrückt werden und/oder die auf die Anlagefläche aufbringbare Kraft erhöht werden. Insbesondere kann durch die Rampe eine Relativbewegung des Batteriefachdeckels relativ zur Gehäuseschale erzwungen werden, wodurch die Dichtung mit einer entsprechend hohen Anpresskraft verquetscht werden kann.

Besonders bevorzugt ist der Batteriefachdeckel um eine Schwenkachse schwenkbar mit der Gehäuseschale verbunden, wobei das Batteriefach zwischen der Schwenkachse und dem Schlüsselschacht vorgesehen ist. Der Batteriefachdeckel kann insbesondere über einen in einen Schlitz eingesetzten Ansatz in einem begrenzten Winkelbereich verschwenkt werden.

Dadurch, dass das Batteriefach zwischen der Schwenkachse und dem Schlüsselschacht vorgesehen ist, kann über den Hebeleffekt bei einer durch das Einführen des Schlüsselschafts verursachten Schwenkbewegung des Batteriefachdeckels eine entsprechend hohe Anpresskraft im Bereich des Batteriefachs erreicht werden. Ferner wird ein frei abstehender Ansatz, der entsprechend stark zurückfedern kann, vermieden. In der Endposition des Schlüsselschafts kann der Batteriefachdeckel sowohl im Bereich der Schwenkachse als auch im Bereich der des Schlüsselschachts eingespannt sein und die auf die Batterie und/oder auf die Dichtung aufgebrachten Kräfte abtragen.

Insbesondere weist die Gehäuseschale ein in dem Batteriefach vorgesehenes Federelement, insbesondere eine Kontaktfeder zur elektrischen Kontaktierung der Batterie, auf, wobei durch das Federelement eine entgegen der von dem Schlüsselschaft aufgebrachten Anpresskraft gerichtete Federkraft auf die Batterie aufbringbar ist. Mit Hilfe des Federelements kann die Batterie direkt oder indirekt gegen den Batteriefachdeckel gedrückt werden. In der Endposition des Schlüsselschafts kann dadurch der Batteriefachdeckel die Batterie mit einer entsprechenden Kraft gegen die elektrischen Kontakte drücken und dadurch eine sichere elektrische Kontaktierung gewährleisten.

Vorzugsweise ist der Schlüsselschaft aus einem im Querschnitt im Wesentlichen recheckigen Grundkörper mit zwei einander gegenüberliegenden Schmalseiten hergestellt, wobei der Schlüsselschaft in der Endposition mit einer der Schmalseiten an der Anlagefläche des Batteriefachdeckels und mit der anderen Schmalseite an der Gehäuseschale anliegt. Ein zuvor vorhandenes Spiel zwischen dem Schlüsselschaft und der Gehäuseschale und/oder dem Batteriefachdeckel kann durch eine einfache Drehung innerhalb des Schlüsselschachts eliminiert werden, so dass der Schlüsselschaft reibschlüssig, insbesondere mit Presspassung, in der Gehäuseschale aufgenommen ist. In diesem Zustand kann der Schlüsselschaft den Batteriefachdeckel verklemmen und/oder arretieren und gleichzeitig eine hinreichende Anpresskraft über den Batteriefachdeckel an die Dichtung aufbringen.

Nach einer alternativen Ausführungsform der Erfindung kann vorgesehen sein, dass der Schlüsselschacht eine longitudinale Führung des Schlüsselschafts bei einer Bewegung zwischen der Einführposition und der Endposition ermöglicht und/oder erzwingt.

Des Weiteren kann vorgesehen sein, dass jeder Lasche eine Öffnung zugeordnet ist und die Öffnungen der jeweiligen Laschen zur Durchführung des Schlüsselschafts unterschiedlich groß zueinander ausgebildet sind.

Eine besonders gute und zuverlässige Abdichtung des elektronischen Schlüssels ist sichergestellt, wenn die Anlagefläche der Laschen im Querschnitt in Einschubrichtung E des Schlüssels einen schrägen Verlauf aufweisen.

Nach einer weiteren Ausgestaltung des elektronischen Schlüssels ist vorgesehen, dass zumindest in der Endposition der Schlüsselschaft mit mindestens einer Lasche eine keilförmige Verbindung aufweist, welche zur Erhöhung der von dem Schlüsselschaft aufbringbaren Anpresskraft auf die Dichtung dient.

Um ein Herausfallen des Notschlüssels auch bei größeren Erschütterungen auszuschließen, ist der Schlüssel zusätzlich mittels einer durch den Benutzer lösbaren Rastverbindung mit dem Schlüsselschacht und/oder der Gehäuseschale kraftschlüssig und/oder formschlüssig verbindbar.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
Fig. 1: eine schematische teilweise Darstellung verschiedener Einzelteile eines erfindungsgemäßen elektronischen Schlüssels,
Fig. 2: eine schematische Schnittansicht des elektronischen Schlüssels aus Fig. 1 im zusammengesetzten Zustand,
Fig. 3: eine schematische Längsschnittansicht eines erfindungsgemäßen elektronischen Schlüssels in einer zweiten Ausführungsform,
Fig. 4: eine schematische Längsschnittansicht eines erfindungsgemäßen elektronischen Schlüssels in einer dritten Ausführungsform und
Fig. 5: eine schematische Querschnittansicht eines erfindungsgemäßen elektronischen Schlüssels in einer dritten Ausführungsform.

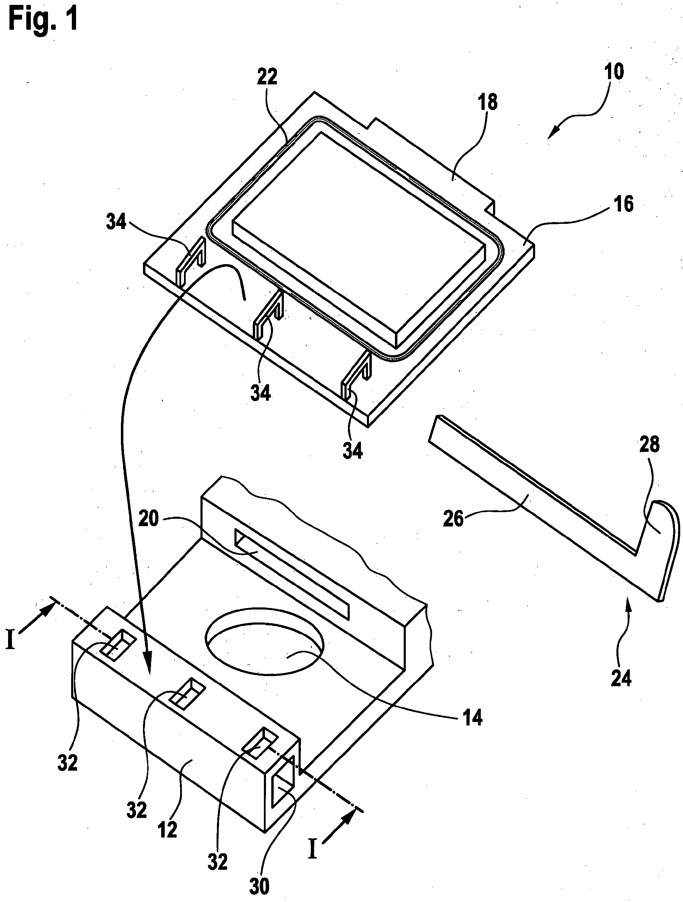

Der in Fig. 1 teilweise dargestellte elektronische Schlüssel 10 weist eine Gehäuseschale 12 auf, die eine nicht dargestellte Schaltungselektronik aufnehmen kann. Die Gehäuseschale 12 weist ein Batteriefach 14 auf, in das eine nicht dargestellte Batterie eingesetzt werden kann. Das Batteriefach 14 kann mit Hilfe eines Batteriefachdeckels 16 abgedeckt werden. Der Batteriefachdeckel 16 weist einen Ansatz 18 auf, der in einen korrespondierenden Schlitz 20 der Gehäuseschale 12 eingesetzt werden kann und dadurch eine begrenzte Schwenkbarkeit des Batteriefachdeckels 16 ermöglicht. Im dargestellten Ausführungsbeispiel ist mit dem Batteriefachdeckel 16 eine Dichtung 22 verbunden, die gegen die Gehäuseschale 12 gedrückt werden kann, um das Batteriefach 16 wasserdicht abzudichten.

Ferner ist ein Notschlüssel 24 vorgesehen, der einen Schlüsselschaft 26 aufweist. Mit dem Schlüsselschaft 26 ist einstückig ein Betätigungsansatz 28 verbunden, der mit einem nicht dargestellten Schlüsselkopf umspritzt sein kann. Der Notschlüssel 24 kann mit seinem

Schlüsselschaft 26 in einen Schlüsselschacht 30 der Gehäuseschale 12 eingesteckt werden. Mit dem Schlüsselschacht 30 sind Öffnungen 32 verbunden, in die ösenförmige Laschen 34 des Batteriefachdeckels 16 eingesteckt werden können.

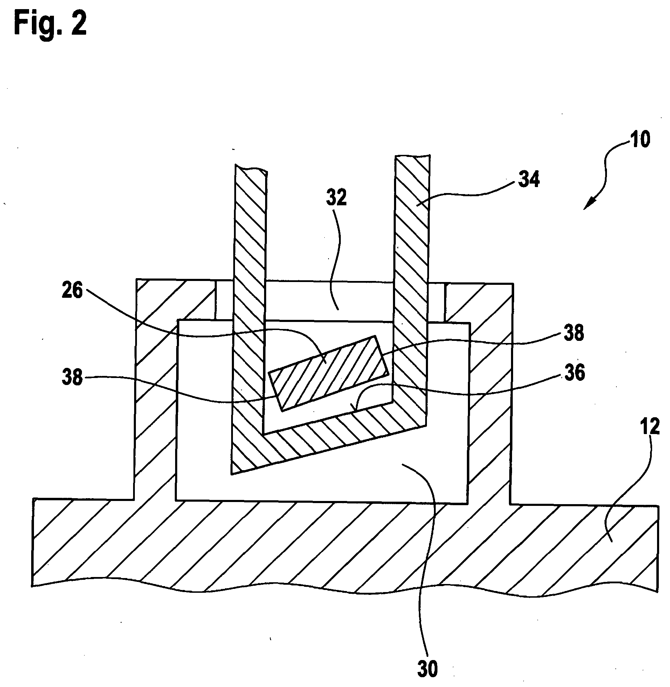

Wie in Fig. 2 dargestellt ragen die Laschen 34 bis in den Schlüsselschacht 30 hinein, so dass der Schlüsselschaft 26 in die Laschen 34 eingefädelt werden kann. Der im Querschnitt im Wesentlichen rechteckige Schlüsselschaft 26 kann an einer durch die Lasche 34 ausgebildeten Anlagefläche 36 anliegen und durch eine Drehung um seine longitudinale Achse mit einer Schmalseite 38 an der Anlagefläche 36 und mit einer anderen Schmalseite 38 an einer Wand des Schlüsselschachts 30 anliegen. Dadurch wird die Lasche 34 weiter in den Schlüsselschacht 30 hineingezogen, so dass von dem Schlüsselschaft 26 eine Kraft auf den Batteriefachdeckel 16 aufgebracht werden kann. Dadurch erhöht sich eine von dem Batteriefachdeckel 16 auf die Dichtung 22 aufgebrachte Anpresskraft, da die Dichtung zwischen dem Batteriefachdeckel 16 und der Gehäuseschale 12 verquetscht wird. Im dargestellten Ausführungsbeispiel ist die Anlagefläche 36 im Vergleich zur übrigen Geometrie des Schlüsselschachts 30 angeschrägt, so dass durch die Lasche 34 eine erste Drehung des Schlüsselschafts 26 erzwungen ist. Insbesondere sind mehrere Laschen 36 mit Anlageflächen 36 vorgesehen, die immer stärker angeschrägt sind, um eine Drehung des Schlüsselschafts 26 innerhalb des Schlüsselschachts 30 um bis zu ca. 90° zu ermöglichen. Der gleiche Effekt kann durch eine entsprechende Formgestaltung der Gehäuseschale 12 im Bereich des Schlüsselschachts 30 erreicht werden.

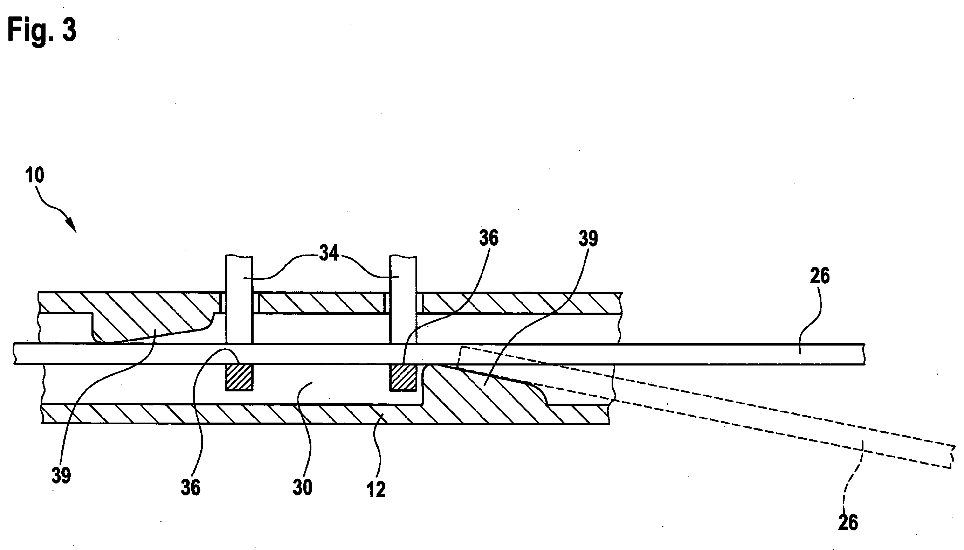

Bei der in Fig. 3 dargestellten Ausführungsform des elektronischen Schlüssels 10 sind durch die Gehäuseschale 12 ausgebildete Rampen 39 vorgesehen, die zusätzlich oder alternativ auch von dem Batteriefachdeckel 16, insbesondere von den Laschen 34, ausgebildet sein können.
Zu Beginn des Einführens des Schlüsselschafts 26 in den Schlüsselschacht 30 ist ein großes Spiel vorgesehen, welches das Einführen der Schlüsselschafts 26 und das Einfädeln des Schlüsselschafts in die Laschen 34 erleichtert. In der Endposition des Schlüsselschafts 26 ist der Schlüsselschaft 26 zwischen den aufeinander zu gerichteten Rampen 39 an einander gegenüberliegenden Seiten des Schlüsselschachts 30 verklemmt, wobei der Schlüsselschaft 26 zuvor die Laschen 34 in den Schlüsselschacht 30 hineinziehen konnte. In dieser Ausführungsform ist es nicht zwingend erforderlich, dass der Schlüsselschaft 26 gedreht wird.
Die Anlageflächen 36 der Laschen 34 brauchen nicht angeschrägt ausgeführt sein.

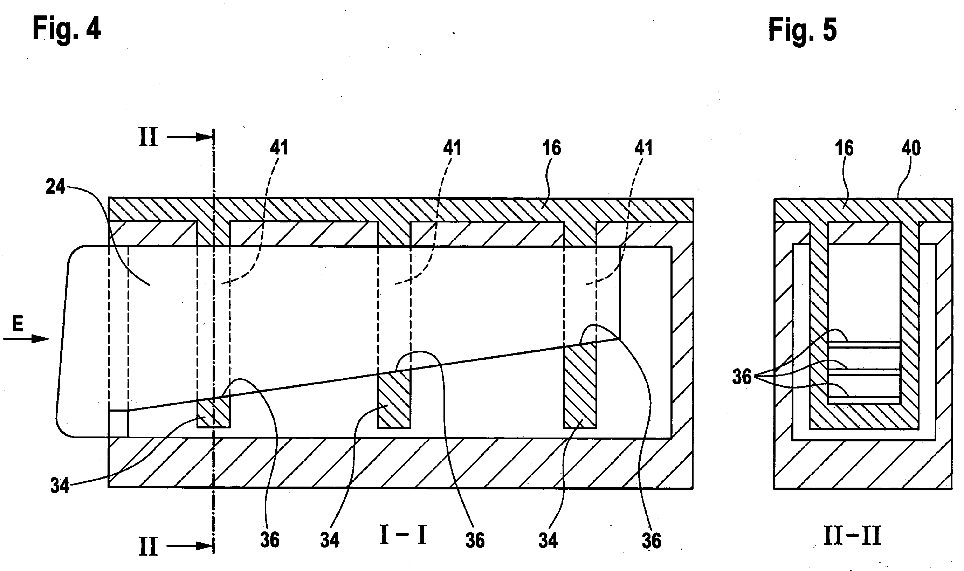

In den Figuren 4 und 5 ist ein drittes Ausführungsbeispiel dargestellt, wobei die Figur 4 ein Schnitt I-I durch den in Figur 1 gezeigten Schlüsselschacht 30 zeigt und in Figur 5 ein Schnitt II-II (siehe Figur 4) durch eine Lasche 36 visualisiert. In Figur 4 ist zusätzlich noch der als Schlüssel ausgebildete Notschlüssel 24 abgebildet. Der Aufbau des dritten Ausführungsbeispiels bleibt im Wesentlichen unverändert.
Im Vergleich zum ersten Ausführungsbeispiel (siehe Figur 1) unterscheiden sich die dem Batteriefachdeckel 16 zugeordneten drei Laschen 34 durch ihre geometrische Form, wobei die Öffnungen 41 der Laschen 34 zur Durchführung des Schlüsselschafts 26 unterschiedlich groß zueinander ausgebildet sind. Die Anlagefläche 36 der Laschen 34 im Querschnitt in Einschubrichtung E des Notschlüssels 24 weisen einen schrägen Verlauf auf, wobei im dritten Ausführungsbeispiel die Anlageflächen 36 schräg zu einer geschnittenen Oberflächenebene 40 des Batteriefachdeckels 16 ausgebildet sind. Dadurch wird eine longitudinale Führung des Schlüsselschaft 26 bei einer Bewegung zwischen der Einführposition und der Endposition ermöglicht und/oder erzwingt. In der Endposition weist der Schlüsselschaft 26 mit allen drei Laschen 34 eine keilförmige Verbindung auf, welche zur Erhöhung der von dem Schlüsselschaft 26 aufbringbaren Anpresskraft auf die Dichtung 22 dient. Im dritten Ausführungsbeispiel muss der Schlüsselschaft 26 daher nur in Längsrichtung bzw. Einschubrichtung E bewegt werden. Durch die keilförmige Verbindung zwischen dem Schlüsselschaft 26 und den Laschen 34 wird der Komfort für den Benutzer weiter erhöht, weil er auf eine zusätzliche Rotationsbewegung des Schlüsselschaft 26 verzichten kann, um den Batteriefachdeckel 16 mit der Gehäuseschale 12 staub- und wasserdicht miteinander zu verbinden.
Wie in Figur 4 weiter dargestellt, ragt der Notschlüssel 24 aus dem Schlüsselschacht 30 heraus. Im dritten Ausführungsbeispiel ist es selbstverständlich auch möglich, den Schlüsselkopf des Notschlüssels 24 oberflächenbündig in den Formverlauf der Gehäuseschale 12 zu integrieren
Ferner kann für alle Ausführungsbeispiele noch vorgesehen sein, dass der Notschlüssel 24 zusätzlich mittels einer durch den Benutzer lösbaren Rastverbindung mit dem Schlüsselschacht kraftschlüssig und/oder formschlüssig verbunden wird. Dabei könnte auf der Gehäuseschale 12 und/oder auf dem Schlüsselschacht 26 ein Schieber angeordnet sein, welcher von außen durch einen Benutzer betätigbar ist, um die Rastverbindung zwischen Notschlüssel 24 und Schlüsselschacht 26 aufzuheben. Durch diese Maßnahmen gelingt es, ein Herausfallen des Notschlüssels 24 auch bei einer sich lösenden Verbindung zwischen den Laschen 34 und dem Schlüsselschaft 26 zu vermeiden.

### Bezugszeichenliste

- 10: elektronischer Schlüssel
- 12: Gehäuseschale
- 14: Batteriefach
- 16: Batteriefachdeckel
- 18: Ansatz
- 20: Schlitz
- 22: Dichtung
- 24: Notschlüssel
- 26: Schlüsselschaft
- 28: Betätigungsansatz
- 30: Schlüsselschacht
- 32: Öffnung
- 34: Lasche
- 36: Anlagefläche
- 38: Schmalseite
- 39: Rampe
- 40: Oberflächenebene des Batteriefachdeckels 16
- 41: Öffnung der Lasche 34

## Patentansprüche

1. Elektronischer Schlüssel zum drahtlosen Betrieb eines Schlosses, insbesondere Kraftfahrzeugschloss, mit einer Gehäuseschale (12) zur zumindest teilweisen Aufnahme einer Schaltungselektronik für den drahtlosen Betrieb des Schlosses, wobei die Gehäuseschale (12) ein Batteriefach (14) zur Aufnahme einer Batterie zur Energieversorgung der Schaltungselektronik aufweist, einem Batteriefachdeckel (16) zum Abdecken der in dem Batteriefach (14) aufgenommenen Batterie, einem einen in die Gehäuseschale (12) einsteckbaren Schlüsselschaft (26) aufweisenden Notschlüssel (24) zum mechanischen Betrieb des Schlosses, wobei der Schlüsselschaft (26) zwischen einer Einführposition, in welcher der Schlüsselschaft (26) an einem Schlüsselschacht (30) der Gehäuseschale (12) angesetzt ist, und einer Endposition, in welcher der Schlüsselschaft (26) in dem Schlüsselschacht (30) sicher aufgenommen ist, bewegbar ist, und einer zwischen der Gehäuseschale (12) und dem Batteriefachdeckel (16) angeordneten Dichtung (22) zum Schutz der Batterie vor Umwelteinflüssen, wobei der Batteriefachdeckel (16) eine Anlagefläche (36) zum direkten Kontakt an dem Schlüsselschaft (26) aufweist und der Schlüsselschaft (26) in der Endposition über die Anlagefläche (36) des Batteriefachdeckels (16) eine Anpresskraft auf die Dichtung (22) ausübt
**dadurch gekennzeichnet, dass**
der Batteriefachdeckel (16) eine insbesondere ösenförmige Lasche (34) zur Ausbildung der Anlagefläche (36) aufweist.

2. Elektronischer Schlüssel nach Anspruch 1 **dadurch gekennzeichnet, dass** die Anlagefläche (36) des Batteriefachdeckels (16) einen Teil einer Begrenzung des Schlüsselschachts (30) ausbildet.

3. Elektronischer Schlüssel nach einem der Ansprüche 1 bis 2 **dadurch gekennzeichnet, dass** der Schlüsselschaft (26) mit einem Schlüsselkopf verbunden ist, wobei der Schlüsselkopf in der Endposition des Schlüsselschafts (26) oberflächenbündig in den Formverlauf der Gehäuseschale (12) integriert ist.

4. Elektronischer Schlüssel nach einem der Ansprüche 1 bis 3 **dadurch gekennzeichnet, dass** der Batteriefachdeckel (16) um eine Schwenkachse schwenkbar mit der Gehäuseschale (12) verbunden ist, wobei das Batteriefach (14) zwischen der Schwenkachse und dem Schlüsselschacht (30) vorgesehen ist.

5. Elektronischer Schlüssel nach einem der Ansprüche 1 bis 4 **dadurch gekennzeichnet, dass** die Gehäuseschale (12) ein in dem Batteriefach (14) vorgesehenes Federelement, insbesondere eine Kontaktfeder zur elektrischen Kontaktierung der Batterie, aufweist, wobei durch das Federelement eine entgegen der von dem Schlüsselschaft (26) aufgebrachten Anpresskraft gerichtete Federkraft auf die Batterie aufbringbar ist.

6. Elektronischer Schlüssel nach einem der Ansprüche 1 bis 5 **Dadurch gekennzeichnet, dass** der Schlüsselschaft (26) aus einem im Querschnitt im Wesentlichen recheckigen Grundkörper mit zwei einander gegenüberliegenden Schmalseiten (38) hergestellt ist, wobei der Schlüsselschaft (26) in der Endposition mit einer der Schmalseiten (38) an der Anlagefläche (36) des Batteriefachdeckels (16) und mit der anderen Schmalseite (38) an der Gehäuseschale (12) anliegt.

7. Elektronischer Schlüssel nach einem der Ansprüche 1 bis 6 **dadurch gekennzeichnet, dass** die Gehäuseschale (12) und/oder der Batteriefachdeckel (16) mindestens eine Rampe (39) zur Zwangsführung des Schlüsselschafts (26), insbesondere zur Erhöhung der von dem Schlüsselschaft (26) aufbringbaren Anpresskraft auf die Dichtung (22), aufweist.

8. Elektronischer Schlüssel nach einem der Ansprüche 1 bis 7 **dadurch gekennzeichnet, dass** der Schlüsselschacht (30) eine Drehung des Schlüsselschafts (26) bei einer Bewegung zwischen der Einführposition und der Endposition ermöglicht und/oder erzwingt.

9. Elektronischer Schlüssel nach einem der Ansprüche 1 bis 8 **dadurch gekennzeichnet, dass** der Schlüsselschacht (30) eine longitudinale Führung des Schlüsselschafts (26) bei einer Bewegung zwischen der Einführposition und der Endposition ermöglicht und/oder erzwingt.

10. Elektronischer Schlüssel nach Anspruch 9 **dadurch gekennzeichnet, dass** jeder Lasche (34) eine Öffnung (41) zugeordnet ist und die Öffnungen der jeweiligen Laschen (34) zur Durchführung des Schlüsselschafts (26) unterschiedlich groß zueinander ausgebildet sind.

11. Elektronischer Schlüssel nach Anspruch 9 oder 10 **dadurch gekennzeichnet, dass** die Anlagefläche (36) der Laschen (34) im Querschnitt in Einschubrichtung E des Schlüssels (24) einen schrägen Verlauf aufweisen.

12. Elektronischer Schlüssel nach Anspruch 9 bis 11 **dadurch gekennzeichnet, dass** zumindest in der Endposition der Schlüsselschaft (26) mit mindestens einer Lasche (34) eine keilförmige Verbindung aufweist, welche zur Erhöhung der von dem Schlüsselschaft (26) aufbringbaren Anpresskraft auf die Dichtung (22) dient.

13. Elektronischer Schlüssel nach einem der Ansprüche 1 bis 12 **dadurch gekennzeichnet, dass** der Schlüssel (24) zusätzlich mittels einer durch den Benutzer lösbaren Rastverbindung mit dem Schlüsselschacht (30) und/oder der Gehäuseschale (12) kraftschlüssig und/oder formschlüssig verbindbar ist.

## Claims

1. An electronic key for wireless operation of a lock, in particular a motor vehicle lock, having: a housing shell (12) for at least partially accommodating switching electronics for wireless operation of the lock, the housing shell (12) having a battery compartment (14) for accommodating a battery for supplying energy to the switching electronics; a battery compartment cover (16) for covering the battery accommodated in the battery compartment (14); an emergency key (24), which has a key shank (26) that can be inserted into the housing shell (12), for mechanical operation of the lock, the key shank (26) being movable between an insertion position, in which the key shank (26) is placed at a key shaft (30) in the housing shell (12), and a final position, in which the key shank (26) is securely held in the key shaft (30); and a seal (22), which is arranged between the housing shell (12) and the battery compartment cover (16), for protecting the battery from environmental influences, the battery compartment cover (16) having a contact face (36) for direct contact with the key shank (26), and the key shank (26) exerting a pressure force on the seal (22) via the contact face (36) of the battery compartment cover (16) when in the final position,
**characterised in that**
the battery compartment cover (16) has an in particular lug-shaped tab (34) for forming the contact face (36).

2. The electronic key according to Claim 1, **characterised in that** the contact face (36) of the battery compartment cover (16) forms part of a boundary of the key shaft (30).

3. The electronic key according to one of Claims 1 to 2, **characterised in that** the key shank (26) is connected to a key head, wherein the key head is integrated in the shape profile of the housing shell (12) in a surface-flush manner when the key shank (26) is in the final position.

4. The electronic key according to one of Claims 1 to 3, **characterised in that** the battery compartment cover (16) is connected to the housing shell (12) such that said cover can pivot about a pivot axis, wherein the battery compartment (14) is provided between the pivot axis and the key shaft (30).

5. The electronic key according to one of Claims 1 to 4, **characterised in that** the housing shell (12) has a spring element, in particular a contact spring for making electrical contact with the battery, said spring element being provided in the battery compartment (14), wherein a spring force that is directed counter to the pressure force applied by the key shank (26) can be applied to the battery by means of the spring element.

6. The electronic key according to one of Claims 1 to 5, **characterised in that** the key shank (26) is produced from a main body of substantially rectangular cross section with two mutually opposite narrow sides (38), wherein the key shank (26) bears with one of the narrow sides (38) against the contact face (36) of the battery compartment cover (16) and with the other narrow side (38) against the housing shell (12) when in the final position.

7. The electronic key according to one of Claims 1 to 6, **characterised in that** the housing shell (12) and/or the battery compartment cover (16) has at least one ramp (39) for restricted guidance of the key shank (26), in particular for increasing the pressure force that can be applied by the key shank (26) to the seal (22).

8. The electronic key according to one of Claims 1 to 7, **characterised in that** the key shaft (30) allows and/or forces a rotation of the key shank (26) during a movement between the insertion position and the final position.

9. The electronic key according to one of Claims 1 to 8, **characterised in that** the key shaft (30) allows and/or forces longitudinal guiding of the key shank (26) during a movement between the insertion position and the final position.

10. The electronic key according to Claim 9, **characterised in that** each tab (34) is assigned an opening (41) and the openings of the respective tabs (34) have different sizes from each other for guiding through the key shank (26).

11. The electronic key according to Claim 9 or 10, **characterised in that** the cross sections of the contact faces (36) of the tabs (34) have an oblique profile in the insertion direction E of the key (24).

12. The electronic key according to Claim 9 to 11, **characterised in that** the key shank (26) has, at least in the final position, a wedge-shaped connection to at least one tab (34), which connection is used to increase the pressure force that can be applied to the seal (22) by the key shank (26).

13. The electronic key according to one of Claims 1 to 12, **characterised in that** the key (24) can also be connected in a force-fitting and/or form-fitting manner to the key shaft (30) and/or the housing shell (12) by means of a latch connection that can be undone by the user.

## Revendications

1. Clé électronique pour le fonctionnement sans fil d'une serrure, notamment une serrure de véhicule automobile, comportant une coque de boîtier (12) pour renfermer au moins partiellement une électronique de commutation pour le fonctionnement sans fil de la serrure, dans laquelle la coque de boîtier (12) présente un compartiment à pile (14) pour recevoir une pile pour alimenter électriquement l'électronique de commutation, un couvercle de compartiment à pile (16) pour recouvrir la batterie enfermée dans le compartiment à pile (14), une clé de secours (24) présentant une tige de clé (26) enfichable dans la coque de boîtier (12) pour le fonctionnement mécanique de la serrure, dans lequel la tige de clé (26) est déplaçable entre une position d'insertion, dans laquelle la tige de clé (26) est appliquée sur un canal de clé (30) de la coque de boîtier (12), et une position finale, dans laquelle la tige de clé (26) est renfermée de manière sécurisée dans le canal de clé (30), et un joint d'étanchéité (22) disposé entre la coque de boîtier (12) et le couvercle de compartiment à pile (16) pour protéger la batterie contre les influences environnementales, dans lequel le couvercle du compartiment à pile (16) présente une surface de positionnement (36) pour le contact direct sur la tige de clé (26) et la tige de clé (26) dans la position finale exerce par l'intermédiaire de la surface de positionnement (36) du couvercle de compartiment à pile (16) une force de pressage sur le joint d'étanchéité (22),
**caractérisée en ce que**
le couvercle du compartiment à pile (16) présente une languette notamment en forme d'oeillet (34) pour réaliser la surface de positionnement (36).

2. Clé électronique selon la revendication 1, **caractérisée en ce que** la surface de positionnement (36) du couvercle de compartiment à pile (16) réalise une partie d'une délimitation du canal de clé (30).

3. Clé électronique selon une des revendications 1 à 2, **caractérisée en ce que** la tige de clé (26) est reliée avec une tête de clé, dans laquelle la tête de clé dans la position finale de la tige de clés (26) est intégrée au ras de la surface dans le cours de forme de la coque de boîtier (12).

4. Clé électronique selon une des revendications 1 à 3, **caractérisée en ce que** le couvercle du compartiment à pile (16) est reliée de manière pivotante autour d'un axe de pivotement avec la coque de boîtier (12), dans laquelle le compartiment à pile (14) est prévue entre l'axe pivotant et le canal de clé (30).

5. Clé électronique selon une des revendications 1 à 4, **caractérisée en ce que** la coque de boîtier (12) présente un élément de ressort prévu dans le compartiment à pile (14), notamment un ressort de contact pour le contact électrique de la pile, dans laquelle par l'intermédiaire de l'élément de ressort une force de ressort orientée en sens contraire à la force de pressage appliquée sur la tige de clé (26) peut être appliqué sur la pile.

6. Clé électronique selon une des revendications 1 à 5, **caractérisée en ce que** la tige de clé (26) est constituée d'un corps de base en coupe transversale essentiellement rectangulaire avec deux côtés minces (38) opposés l'un à l'autre, dans laquelle la tige de clé (26) dans la position finale vient reposer par un des côtés minces (38) sur la surface de positionnement (36) du couvercle de compartiment à pile (16) et par l'autre côté mince (38) sur la coque de boîtier (12).

7. Clé électronique selon une des revendications 1 à 6, **caractérisée en ce que** la coque de boîtier (12) et/ou le couvercle de compartiment à pile (16) présente au moins une rampe (39) pour le guidage forcé de la tige de clé (26) notamment pour augmenter la force de pressage exercée sur le joint d'étanchéité (22) par la tige de clé (26).

8. Clé électronique selon une des revendications 1 à 7, **caractérisée en ce que** le canal de clé (30) permet et/ou force une rotation de la tige de clé (26) lors d'un mouvement entre la position d'insertion et la position finale.

9. Clé électronique selon une des revendications 1 à 8, **caractérisée en ce que** le canal de clé (30) permet et/ou force un guidage longitudinal de la tige de clé (26) lors d'un mouvement entre la position d'insertion et la position finale.

10. Clé électronique selon la revendication 9, **caractérisée en ce que** chaque languette (34) est coordonnée à une ouverture (41) et les ouvertures des languettes respectives (34) sont configurés pour le passage de la tige de clé (26) à des grandeurs différentes.

11. Clé électronique selon la revendication 9 ou 10, **caractérisée en ce que** la surface de positionnement (36) des languettes (34) présente un cours oblique en coupe transversale dans la direction de poussée E de la clé (24).

12. Clé électronique selon la revendication 9 à 11, **caractérisée en ce que** au moins dans la position finale la tige de clé (26) présente une liaison en forme de coin avec au moins une languette (34), qui sert à augmenter la force de pressage applicable par la tige de clé (26) sur le joint d'étanchéité (22).

13. Clé électronique selon une des revendications 1 à 12, **caractérise en ce que** la clé (24) peut être relié en outre au moyen d'une liaison par encliquetage réversible par l'utilisateur avec le canal de clé (30) et/ou la coque de boîtier (12) par complémentarité de forme et/ou de force.
